(19)

Europäisches Patentamt

European Patent Office

Office européen des brevets

(11) **EP 4 527 537 A1**

(12) **EUROPEAN PATENT APPLICATION**

(43) Date of publication:
26.03.2025 Bulletin 2025/13

(21) Application number: 24199003.5

(22) Date of filing: 06.09.2024

(51) International Patent Classification (IPC):
*B23K 9/12* *(2006.01)* *B23K 9/133* *(2006.01)*

(52) Cooperative Patent Classification (CPC):
**B23K 9/1336; B23K 9/124**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.09.2023 US 202363537071 P**
**05.09.2024 US 202418825440**

(71) Applicant: **Illinois Tool Works Inc.**
**Glenview IL 60025 (US)**

(72) Inventor: **LAHTI, Thomas D.**
**Glenview, 60025 (US)**

(74) Representative: **HGF**
**HGF Limited**
**1 City Walk**
**Leeds LS11 9DX (GB)**

(54) **SYSTEM FOR UTILIZING WIRE FEEDERS WITH ADJUSTABLE MECHANICAL ADVANTAGE**

(57) Systems and methods are provided for utilizing wire feeders with adjustable mechanical advantage. An example wire feeder, for use in welding-type systems, may include one or more wire feeding components configured to feed electrode wire to a welding-type torch, and one or more wire tensioning control components, with each of the one or more wire tensioning control components configured to enable adjusting a tensioning force applied to the electrode wire, and with at least one tensioning control component being configured such that a fulcrum distance to an associated fulcrum point is adjustable, with the electrode wire passing the fulcrum point during feeding of the electrode wire. At least one portion of the at least one tensioning control component may be movable relative to the fulcrum point, such as in one or more of a plurality of directions relative to the fulcrum point.

**FIG. 1**

EP 4 527 537 A1

## Description

CLAIM OF PRIORITY

This patent application claims priority to and claims benefit from United States Provisional Patent Application Serial No. 63/537,071, filed on September 7, 2023. The above identified application is hereby incorporated herein by reference in its entirety.

BACKGROUND

Welding has become increasingly ubiquitous. Welding can be performed in an automated manner or in a manual manner (e.g., being performed by a human). Equipment or components used during welding operations may be driven using engines. For example, engines may be used to drive, for example, generators, power sources, etc. used during welding operations.

In some instances, conventional welding-type systems may have some limitations and/or disadvantages. For example, wire feeders used in some conventional welding-type systems may have limitations with respect with managing various parameters or functions associating with wire feeding during welding operations.

Further limitations and disadvantages of conventional approaches will become apparent to one skilled in the art, through comparison of such approaches with some aspects of the present systems and methods set forth in the remainder of this disclosure with reference to the drawings.

BRIEF SUMMARY

Aspects of the present disclosure relate to welding solutions. More specifically, various implementations in accordance with the present disclosure are directed to systems and methods for utilizing wire feeders with adjustable mechanical advantage, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

BRIEF DESCRIPTION OF THE DRAWINGS

Fig. 1 shows an example welding-type setup that may be used for welding-type operations.

Fig. 2 shows an example welding-type wire feeder with adjustable mechanical advantage, in accordance with aspects of this disclosure.

Fig. 3 is a graph diagram illustrating force on wire as a function of spring displacement, in accordance with aspects of this disclosure.

Fig. 4 shows an example wire feeder tensioning mechanism with continuous placement adjustment, in accordance with aspects of this disclosure.

Fig. 5 shows an example wire feeder tensioning mechanism with placement adjustment using a plurality of discrete positions, in accordance with aspects of this disclosure.

DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set $\{(x), (y), (x, y)\}$. In other words, "x and/or y" means "one or both of x and y." As another example, "x, y, and/or z" means any element of the seven-element set $\{(x), (y), (z), (x, y), (x, z), (y, z), (x, y, z)\}$. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

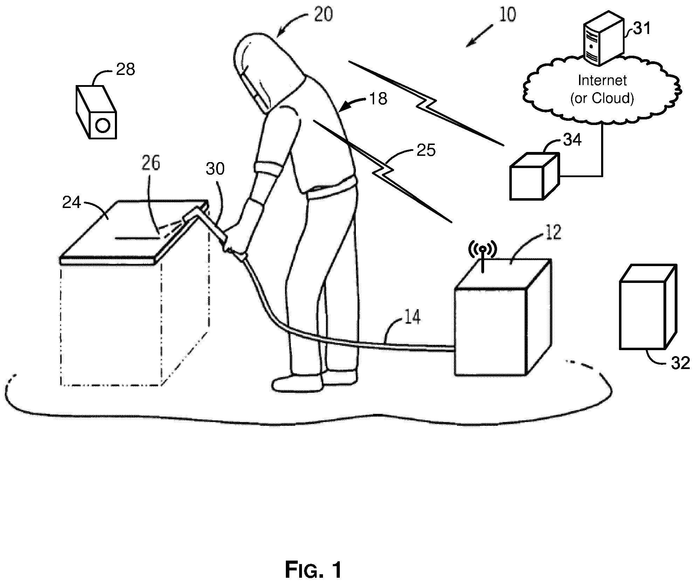

Fig. 1 shows an example welding-type setup that may be used for welding-type operations. Referring to Fig. 1, there is shown an example welding-type setup 10 in which an operator (user) 18 is wearing welding headwear 20 and welding a workpiece 24 using a torch 30 to which power is delivered by equipment 12 via a conduit 14, with weld monitoring equipment 28, which may be available for use in monitoring welding operations.

The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations.

The welding-type setup 10 of Fig. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of a torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in Fig. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and or satellite telematics hardware, for example.

In some example implementations, welding-type systems or setups, such as the welding-type setup 10, may be configured for collecting and reporting data relating to welding-type operations and/or to functions or components utilized during welding-type operations. For example, data from welding processes, power sources, welding-related accessories etc. in a weld setup may be collected. In this regard, the collected data may comprise, for example, current, voltage, wire feed speed, weld states, and numerous other power source parameters and settings.

The collected data may then be sent to remote entities (e.g., a remote server 31, which may be a manufacturer-controlled, Internet-based cloud server) and/or to local systems or devices (e.g., local PC, a tablet, a smartphone, etc.). The collected data may be utilized in enhancing welding-related systems and/or operations. For example, manufacturers may utilize the collected data to identify issues (and correct them) and/or devise modifications or improvements in the various components. Further, users may be able to generate reports on collected data to measure, document, and improve their processes.

In some instances, it may be desirable to control and/or adjust certain aspects of various functions in welding-type setups, such as the welding-type setup 10 of Fig. 1. For example, as noted the welding-type setup 10 may incorporate a wire feeder that may be used in feeding wire/filler material, and in some instances controlling or adjusting certain aspects or parameters associated with the wire feeding may be desirable. One such aspect or parameter is the tensioning of the wire while being fed during welding-type operations. In this regard, in some implementations, the tensioning of the wire may be controlled such as by adjusting a force applied on the wire within the wire feeder. Conventional solutions for adjusting tensioning of the wire may have some limitations and/or shortcomings, however.

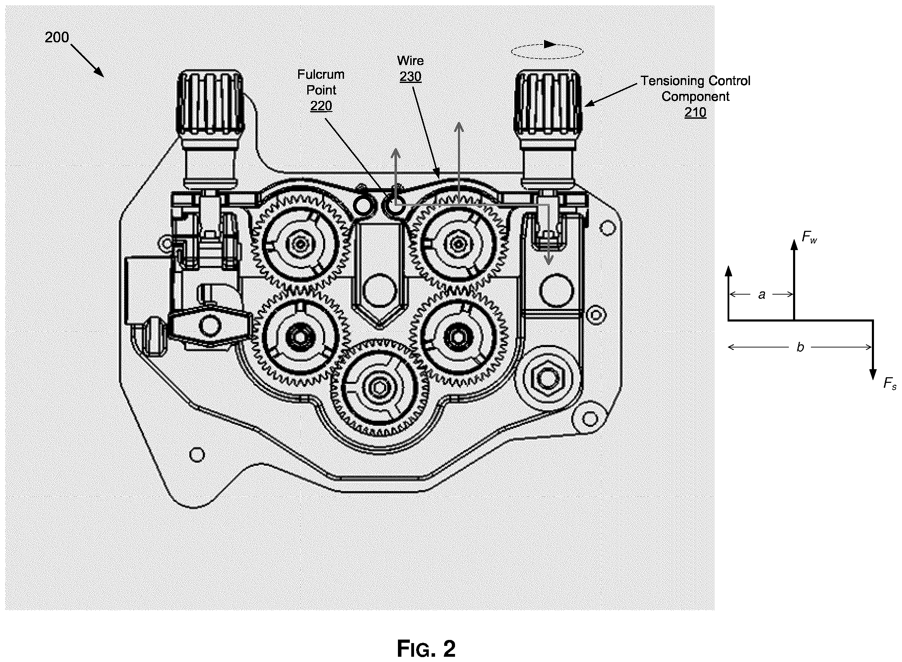

In this regard, in conventional solutions tensioning may be adjusted in very limited manner that may not accommodate wide range of variations in the wire (e.g., with respect to certain characteristics associated therewith, such as type, width, etc.), variations in the in the welding processes that are utilized, etc. Solutions in accordance with the present disclosure overcome at least some of the limitations and/or shortcomings associated with conventional solutions, such as by utilizing improved mechanisms for adjusting tensioning of wires. Such improved mechanisms are described in more detail below, particularly with respect to Figs. 2-5.

Fig. 2 shows an example welding-type wire feeder with adjustable mechanical advantage, in accordance with aspects of this disclosure. Shown in Fig. 2 is welding-type wire feeder 200 (or portion thereof).

The wire feeder 200 may be configured for use in a welding-type system/setup for facilitating feeding of wires (e.g., electrode wires) utilized during welding operations. In this regard, the wire feeder 200 may comprise, e.g., suitable components (e.g., gears, etc.) for feeding electrode wire(s) 230. In some instances, it may be desirable to apply tensioning force to the electrode wire(s). Hence, wire feeders, such as the wire feeder 200, may incorporate one or more tensioning control component(s) 210, which may be configured for applying tensioning force onto the wires 230.

Different designs and/or mechanisms may be used in implementing such tensioning control components 210 and/or in effectuating the application of tensioning forces thereby. For example, in some instances, such as in the implementation illustrated in Fig. 2, the tensioning control components 210 may be implemented as rotational based assembly, such as using knob-based element, with the tensioning forced applied by the tensioning control component 210 being increased or decreased by rotating the knob, as shown in Fig. 2.

In accordance with the present disclosure, the wire feeder 200 may be modified to incorporate improved mechanisms for adjusting tensioning of the wire(s) during wire feeding operations. In this regard, as noted in conventional solutions, adjusting wire tensioning may be done in very limited manner. For example, in implementations utilizing a knob-based design, as shown in Fig. 2, the force on the wire may be adjusted by rotating an adjustment knob, as a spring in an adjustment lever coupled to the adjustment knob is displaced by turning the adjustment knob-e.g., in a clockwise manner. Such design may allow for limited range of adjustment, however, as it allows for only a finite level of adjustment (e.g., based on spring free length to spring solid height). Thus, the spring must be selected carefully, to work for various wire sizes and types, but this still leaves the range of possible adjustment limited as compromises must be made to work for the high and low end of the wire size and type spectrum.

Solutions based on the present disclosure address some of these issues and limitations by modifying the wire feeder to allow for additional and variable adjustments to the "force on wire", such as by use of adjustable mechanical advantage. This may be done, for example, by modifying the wire feeder to allow for movement of components used in applying tensioning force (e.g., tensioning control components 210) such that the placement of the components may be varied or adjusted in a manner that affects the tensioning force or application thereof (e.g., by use the tensioning related adjustment as done in conventional solutions). Such additional and variable placement based adjustments may allow for a much greater range of "force on wire" to allow for greater force control, such as based on one or more characteristics of the wire-e.g., throughout the spectrum of wire size and type.

For example, with reference to the wire feeder 200 as illustrated in Fig. 2, the wire 230 passes a fulcrum point 220 (e.g., with the fulcrum point configured such that wire passes through, over, under, or in proximity to the fulcrum point), as it is fed within the wire feeder 200, just before passing through the tensioning control component 210. In such arrangement, the "force on wire" applied to the wire 230 may be determined using the formula:

$$F_w = \frac{b}{a} \cdot F_s$$

where "$F_w$" is the tensioning force applied to the wire 230, "$F_s$" is the tensioning force (e.g., spring force) applied by the tensioning control component 210, and b/a is the applicable mechanical advantage, with "$b$" being the distance between the fulcrum point 220 and the tensioning control component 210 (or, specifically, the point where the tensioning force is applied by the tensioning control component 210 onto the wire), and "$a$" being the distance between the fulcrum point 220 and the point where the tensioning force ($F_w$) is effectively applied to the wire (e.g., contact point over the gear as shown in Fig. 2). The distance "$b$" is also referred to hereinafter as the "fulcrum distance."

In conventional solutions, the mechanical advantage is constant-that is, cannot be adjusted-because the components used in the wire feeder, particularly components involved in applying the tensioning force, are fixed, and as such distances "$a$" and "$b$" (and thus the ratio thereof) are also fixed and cannot be changed. However, in solutions based on the present disclosure, mechanical advantage is adjustable. This may be done by modifying the wire feeder such that distances "$b$" and/or "$a$" may be adjustable, thus allowing for the mechanical advantage to be a variable. In this regard, in implementations similar to the one illustrated in Fig. 2, the mechanical advantage may be increased by increasing distance "b" and/or decreasing distance "a." Similarly, the mechanical advantage may be decreased by decreasing distance "b" and/or increasing distance "a." For example, at least one tensioning control component (e.g., the tensioning control component 210 in Fig. 2), or a portion thereof, may be configured such that the fulcrum distance-that is, distance "$b$" to a fulcrum point associated therewith (e.g., the fulcrum point 210 in Fig. 2)-is adjustable. Nonetheless, the disclosure is not limited to implementation where only one tensioning control component is modified to allow for adjusting mechanical advantage, and as such in some implementations multiple tensioning control component with adjustable mechanical advantage may be utilized.

The fulcrum distance, and thus the mechanical advantage in general, may be adjusted based on one or more criteria. The fulcrum distance may be adjusted based on, e.g., one or more of a characteristic of the electrode wire, a type of welding process being applied, a type of mechanism used in the wire feeder for moving the electrode wire during feeding operation, etc. The characteristic of the electrode wire comprises one or both of a type and a thickness of the electrode wire. To further enhance operations, the wire feeder, or specifically the tensioning control component (or the portion thereof), may incorporate feedback means (e.g., markings, visual indicators, or the like) to assist the user in selecting adjustments that optimize tensioning related functions, such as based on particular required or desired characteristics-e.g., based on material of the wire (e.g., steel vs. aluminum), thickness of the wire, etc.

In some example implementations, the adjustability may be achieved by designing or implementing the tensioning control component such that the one tensioning control component (or portion thereof) may be movable relative to the fulcrum point. This may be done by implementing the tensioning control component (or portion thereof) such that it simply may be moved laterally relative to the fulcrum point. However, the disclosure is not so limited, and as such in some implementations the tensioning control component (or portion thereof) may be movable in one or more of a plurality of directions relative to the fulcrum point-e.g., in one or more of a lateral direction relative to the fulcrum point, a vertical direction relative to the fulcrum point, an angular manner relative to the fulcrum point, etc. Further, in some implementations the tensioning control component (or portion thereof) may also be movable (e.g., concurrently) in multiple directions relative to the fulcrum point.

In some example implementations, the tensioning control component (or portion thereof) may be adjustable (e.g., movable) to different positions relative to the fulcrum point. In this regard, the different positions may be set adaptive, such as based on a characteristic of the electrode wire and/or other criteria pertinent to or affected by the tensioning force, and optionally these different positions may be marked to assist in selecting the optimal settings. The characteristic of the electrode wire may comprise one or both of a type and a thickness of the electrode wire.

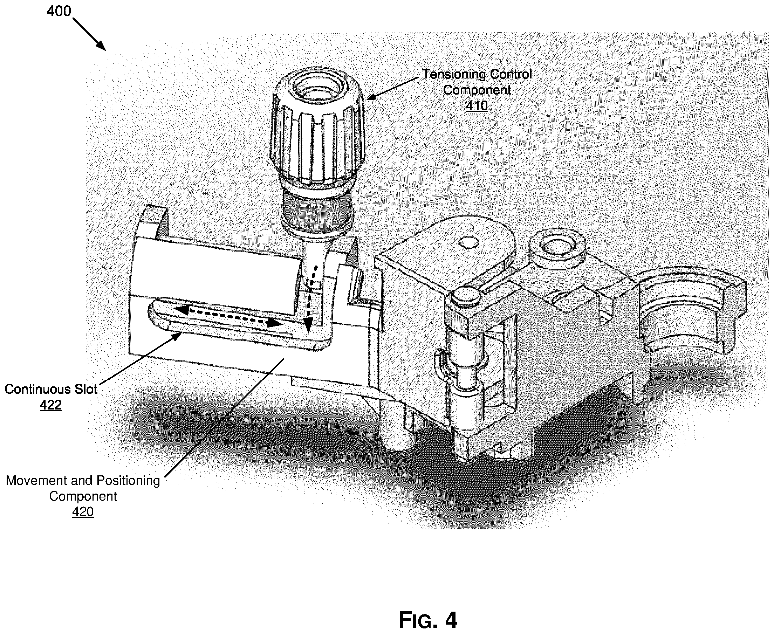

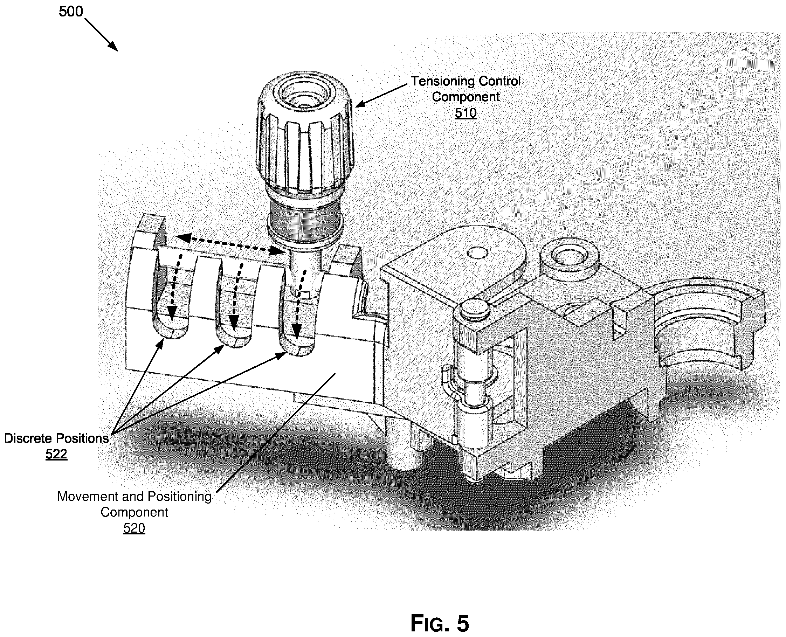

In some example implementations, dedicated components may be used (e.g., added into the wire feeder, such as by incorporation into and/or coupling to the tensioning control component used therein) that are configured for facilitating movement and positioning of the tensioning control component (or portion thereof) to different positions relative to the fulcrum point. Such components are also referred to hereinafter as "movement and positioning components." Example implementations incorporating such movement and positioning components are illustrated in and described in reference to Figs. 4 and 5.

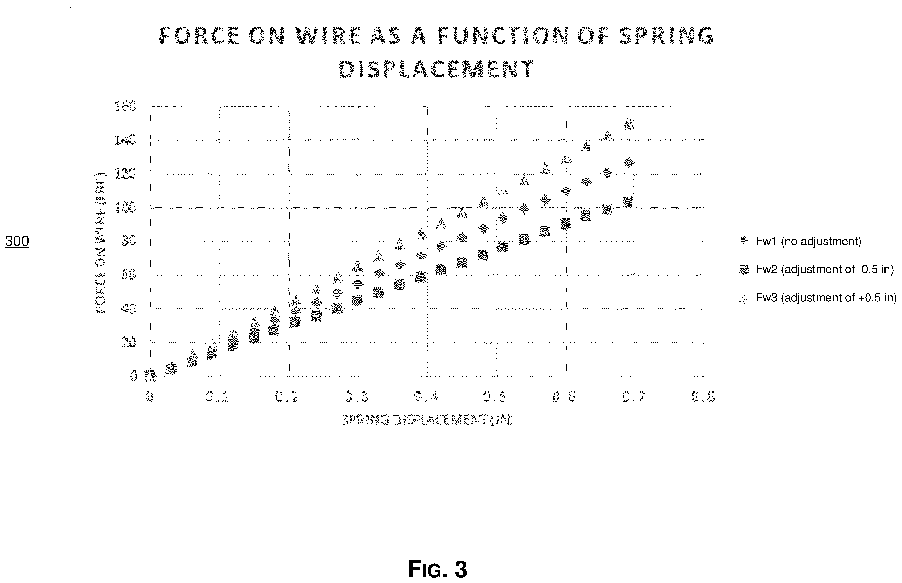

Fig. 3 is a graph diagram illustrating force on wire as a function of spring displacement, in accordance with aspects of this disclosure. Shown in Fig. 3 is graph 300.

The graph 300 comprises data representing force on wire (y-axis), in pound-force (lbf), as a function

of spring displacement (x-axis), in inches (in). In particular, as illustrated in Fig. 3, chart 300 comprises 3 plots: 1) $F_{w1}$ representing data points for force on wire without any adjustment (e.g., spring constant and displacement range), 2) $F_{w2}$ representing data points for force on wire with adjustment (of distance b) by -0.5 in, and 3) $F_{w3}$ representing data points for force on wire with adjustment (of distance $b$) by +0.5 in. As illustrated in graph 300, the range in force (area between plots, namely between $F_{w2}$ and $F_{w3}$) greatly increases with increased spring displacement-that is for bigger $b$.

Fig. 4 shows an example wire feeder tensioning mechanism with continuous placement adjustment, in accordance with aspects of this disclosure. Shown in Fig. 4 is wire feeder tensioning mechanism 400.

The wire feeder tensioning mechanism 400 may comprise suitable components (e.g., mechanical or other types) for providing wire tensioning with adjustable mechanical placement in a wire feeder (e.g., the wire feeder 200 of Fig. 2). In this regard, the wire feeder tensioning mechanism 400 may comprise a tensioning control component 410, which may be similar to the tensioning control component 210 of Fig. 2, and as such may be used in substantially similar manner to apply tensioning force to a wire as it is fed through a wire feeder comprising the wire feeder tensioning mechanism 400. The wire feeder tensioning mechanism 400 may comprise additional components to enable adjusting placement of at least a portion of the tensioning control component 410, particularly relative to a fulcrum point (e.g., similar to the fulcrum point 220 of Fig. 2) associated with the tensioning control component 410. In this regard, the wire subjected to the tensioning force applied by the tensioning control component 410 passes the fulcrum point during feeding operations.

The wire feeder tensioning mechanism 400 is specifically configured to enable continuous placement adjustment. For example, as illustrated in Fig. 4, the wire feeder tensioning mechanism 400 may comprise a movement and positioning component 420 that incorporates a continuous slot 422. Accordingly, during operation, at least a portion of the tensioning control component 410 may move within the continuous slot 422, thus allowing for continuous adjustment (at least within the full length of the continuous slot 422) to the placement of the tensioning control component 410 relative to the associated fulcrum point.

For example, in the example use case shown in Fig. 4, where the tensioning control component 410 comprises a knob based components, the knob assembly may be rotated into the continuous slot 422, and then moved within the continuous slot 422 to a desirable position. While not shown in Fig. 4, the wire feeder tensioning mechanism 400 may incorporate securing mechanism for securing the tensioning control component 410 in place once a position is selected. For example, in the knob-based implementation shown in Fig. 4, the securing mechanism may comprise a bolt-based arrangement (or similar tightening based arrangement) that allows for tightening at least a part of the knob assembly in place once a position is selected. The disclosure is not limited to such design, however, and any suitable securing mechanism may be used.

In some instances, to further improve operations, different positions within continuous slot 422 may be marked, with these different positions being set and marked based on, e.g., different characteristics of the electrode wire. The characteristics may comprise one or both of a type and a thickness of the electrode wire being fed.

Fig. 5 shows an example wire feeder tensioning mechanism with placement adjustment using a plurality of discrete positions, in accordance with aspects of this disclosure. Shown in Fig. 5 is wire feeder tensioning mechanism 500.

The wire feeder tensioning mechanism 500 may comprise suitable components (e.g., mechanical or other types) for providing wire tensioning with adjustable mechanical placement in a wire feeder (e.g., the wire feeder 200 of Fig. 2). In this regard, the wire feeder tensioning mechanism 500 may comprise a tensioning control component 510, which may be similar to the tensioning control component 210 of Fig. 2, and as such may be used in substantially similar manner to apply tensioning force to a wire as it is fed through a wire feeder comprising the wire feeder tensioning mechanism 500. The wire feeder tensioning mechanism 500 may comprise additional components to enable adjusting placement of at least a portion of the tensioning control component 510, particularly relative to a fulcrum point (e.g., similar to the fulcrum point 220 of Fig. 2) associated with the tensioning control component 510. In this regard, the wire subjected to the tensioning force applied by the tensioning control component 510 passes the fulcrum point during feeding operations.

The wire feeder tensioning mechanism 500 is configured to enable placement adjustment using a plurality of discrete positions. For example, as illustrated in Fig. 5, the wire feeder tensioning mechanism 500 may comprise a movement and positioning component 520 that incorporates a plurality of discrete positions 522. Accordingly, during operation, at least a portion of the tensioning control component 510 may move into one of the plurality of discrete positions 522, thus allowing for adjusting the placement of the tensioning control component 510 relative to the associated fulcrum point by a distance corresponding to the selected placement position. In this regard, while the wire feeder tensioning mechanism 500 is shown with only three (3) discrete positions 522, it should be readily understood that this is a non-limiting example implementations, and that in other implementations, different number of discrete positions may be used. In some instances, each discrete position 522 may correspond to a different wire selection associated with a particular distinct combination of one or more wire characteristics (e.g., one or both of a wire type and wire gauge).

For example, in the example use case shown in Fig. 5, where the tensioning control component 510 comprises a knob based components, the knob assembly moved until it lines up with one of the plurality of discrete positions 522, which correspond to a desirable position, and the knob assembly may be rotated into the selected one of the plurality of discrete positions 522. Further, while not shown in Fig. 5, the wire feeder tensioning mechanism 500 may incorporate securing mechanism for securing the tensioning control component 510 in place once a position is selected. For example, in the knob-based implementation shown in Fig. 5, the securing mechanism may comprise a bolt-based arrangement (or similar tightening based arrangement) that allows for tightening at least a part of the knob assembly in place once a position is selected. The disclosure is not limited to such design, however, and any suitable securing mechanism may be used.

In some instances, to further improve operations, the discrete positions 522 may be set and marked, such as based on different characteristics of the electrode wire. For example, each discrete position 522 may correspond to, and be marked to indicate, a different wire selection associated with distinct combination of wire characteristics. The characteristics may comprise, e.g., one or both of a type (e.g., aluminum, steel, etc.) and a thickness (wire gauge) of the electrode wire.

An example welding-type system, in accordance with the present disclosure, comprises a wire feeder comprising one or more wire feeding components configured to feed electrode wire to a welding-type torch, and one or more wire tensioning control components, wherein each of the one or more wire tensioning control components is configured to enable adjusting a tensioning force applied to the electrode wire; and wherein at least one tensioning control component is configured such that a fulcrum distance to an associated fulcrum point is adjustable, and wherein the electrode wire passes the fulcrum point during feeding of the electrode wire.

In an example embodiment, the fulcrum point is configured such that electrode wire passes through, over, under, or in proximity to the fulcrum point.

In an example embodiment, the at least one tensioning control component is configured to enable adjusting the fulcrum distance based on one or more of a characteristic of the electrode wire, a type of welding process, and a type of mechanism used in the wire feeder for moving the electrode wire during feeding of the electrode wire.

In an example embodiment, the characteristic of the electrode wire comprises one or both of a type and a thickness of the electrode wire.

In an example embodiment, the at least one tensioning control component comprises a knob based assembly.

In an example embodiment, at least one portion of the at least one tensioning control component is movable relative to the fulcrum point.

In an example embodiment, the at least one portion of the at least one tensioning control component is movable in one or more of a plurality of directions relative to the fulcrum point.

In an example embodiment, the plurality of directions comprises one or more of a lateral direction relative to the fulcrum point, a vertical direction relative to the fulcrum point, and an angular manner relative to the fulcrum point.

In an example embodiment, the at least one portion of the at least one tensioning control component is movable concurrently in multiple directions relative to the fulcrum point.

In an example embodiment, the at least one portion of the at least one tensioning control component is movable to different positions relative to the fulcrum point, and wherein the different positions are set and/or marked based on a characteristic of the electrode wire. The characteristic of the electrode wire may comprise one or both of a type and a thickness of the electrode wire.

In an example embodiment, the wire feeder further comprises one or more movement and positioning components configured for facilitating movement and positioning of the at least one portion of the at least one tensioning control component relative to the fulcrum point.

In an example embodiment, the one or more movement and positioning components are configured to facilitate movement and positioning of the at least one portion of the at least one tensioning control component into one of a plurality of discrete positions relative to the fulcrum point.

In an example embodiment, the at least one tensioning control component comprises a knob based assembly, wherein the one or more movement and positioning components comprise an engaging part for engaging the knob, and wherein the engaging part comprises a plurality of discrete positions for the knob.

In an example embodiment, the one or more movement and positioning components are configured to facilitate movement and positioning of the at least one portion of the at least one tensioning control component in a continuous manner relative to the fulcrum point.

In an example embodiment, the at least one tensioning control component comprises a knob based assembly, wherein the one or more movement and positioning components comprise an engaging part for engaging the knob, and wherein the engaging part comprises a slot for enabling continuous movement and positioning of the knob.

In an example embodiment, the wire feeder further comprises a securing component configured for securing the at least one portion of the at least one tensioning control component in place once a positioning selection is made.

In an example embodiment, each of the one or more wire tensioning control components is configured to apply at least a portion of the tensioning force using a spring.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.

Aspects of the invention are presented in the following clauses:

Clause 1. A welding-type system, comprising:
a wire feeder comprising:

one or more wire feeding components configured to feed electrode wire to a welding-type torch; and
one or more wire tensioning control components;
wherein:

each of the one or more wire tensioning control components is configured to enable adjusting a tensioning force applied to the electrode wire; and
at least one tensioning control component is configured such that a fulcrum distance to an associated fulcrum point is adjustable, wherein the electrode wire passes the fulcrum point during feeding of the electrode wire.

Clause 2. The welding-type system according to clause 1, wherein the fulcrum point is configured such that electrode wire passes through, over, under, or in proximity to the fulcrum point.

Clause 3. The welding-type system according to clause 1, wherein the at least one tensioning control component is configured to enable adjusting the fulcrum distance based on one or more of a characteristic of the electrode wire, a type of welding process, and a type of mechanism used in the wire feeder for moving the electrode wire during feeding of the electrode wire.

Clause 4. The welding-type system according to clause 3, wherein the characteristic of the electrode wire comprises one or both of a type and a thickness of the electrode wire.

Clause 5. The welding-type system according to clause 1, wherein the at least one tensioning control component comprises a knob based assembly.

Clause 6. The welding-type system according to clause 1, wherein at least one portion of the at least one tensioning control component is movable relative to the fulcrum point.

Clause 7. The welding-type system according to clause 6, wherein the at least one portion of the at least one tensioning control component is movable in one or more of a plurality of directions relative to the fulcrum point.

Clause 8. The welding-type system according to clause 7, wherein the plurality of directions comprises one or more of a lateral direction relative to the fulcrum point, a vertical direction relative to the fulcrum point, and an angular manner relative to the fulcrum point.

Clause 9. The welding-type system according to clause 6, wherein the at least one portion of the at least one tensioning control component is movable concurrently in multiple directions relative to the fulcrum point.

Clause 10. The welding-type system according to clause 6, wherein the at least one portion of the at least one tensioning control component is movable to different positions relative to the fulcrum point, and wherein the different positions are set and/or marked based on a characteristic of the electrode wire.

Clause 11. The welding-type system according to clause 10, wherein the characteristic of the electrode wire comprises one or both of a type and a thickness of the electrode wire.

Clause 12. The welding-type system according to clause 6, further comprising one or more movement and positioning components configured for facilitating movement and positioning of the at least one portion of the at least one tensioning control component relative to the fulcrum point.

Clause 13. The welding-type system according to clause 12, wherein the one or more movement and positioning components are configured to facilitate movement and positioning of the at least one portion of the at least one tensioning control component into one of a plurality of discrete positions relative to the fulcrum point.

Clause 14. The welding-type system according to clause 13, wherein the at least one tensioning control component comprises a knob based assembly, wherein the one or more movement and positioning components comprise an engaging part for engaging the knob, and wherein the engaging part comprises a plurality of discrete positions for the knob.

Clause 15. The welding-type system according to clause 12, wherein the one or more movement and positioning components are configured to facilitate movement and positioning of the at least one portion of the at least one tensioning control component in a continuous manner relative to the fulcrum point.

Clause 16. The welding-type system according to clause 15, wherein the at least one tensioning control component comprises a knob based assembly, wherein the one or more movement and positioning components comprise an engaging part for engaging the knob, and wherein the engaging part comprises a slot for enabling continuous movement and positioning of the knob.

Clause 17. The welding-type system according to clause 6, further comprising a securing component configured for securing the at least one portion of the at least one tensioning control component in place once a positioning selection is made.

Clause 18. The welding-type system according to clause 1, wherein each of the one or more wire tensioning control components is configured to apply at least a portion of the tensioning force using a spring.

**Claims**

1. A welding-type system, comprising:
   a wire feeder comprising:

      one or more wire feeding components configured to feed electrode wire to a welding-type torch; and
      one or more wire tensioning control components;
      wherein:

         each of the one or more wire tensioning control components is configured to enable adjusting a tensioning force applied to the electrode wire; and
         at least one tensioning control component is configured such that a fulcrum distance to an associated fulcrum point is adjustable, wherein the electrode wire passes the fulcrum point during feeding of the electrode wire.

2. The welding-type system according to claim 1, wherein the fulcrum point is configured such that electrode wire passes through, over, under, or in proximity to the fulcrum point.

3. The welding-type system according to claim 1, wherein the at least one tensioning control component is configured to enable adjusting the fulcrum distance based on one or more of a characteristic of the electrode wire, a type of welding process, and a type of mechanism used in the wire feeder for moving the electrode wire during feeding of the electrode wire.

4. The welding-type system according to claim 3, wherein the characteristic of the electrode wire comprises one or both of a type and a thickness of the electrode wire.

5. The welding-type system according to claim 1, wherein the at least one tensioning control component comprises a knob based assembly.

6. The welding-type system according to claim 1, wherein at least one portion of the at least one tensioning control component is movable relative to the fulcrum point.

7. The welding-type system according to claim 6, wherein the at least one portion of the at least one tensioning control component is movable in one or more of a plurality of directions relative to the fulcrum point,
optionally wherein the plurality of directions comprises one or more of a lateral direction relative to the fulcrum point, a vertical direction relative to the fulcrum point, and an angular manner relative to the fulcrum point.

8. The welding-type system according to claim 6, wherein the at least one portion of the at least one tensioning control component is movable concurrently in multiple directions relative to the fulcrum point.

9. The welding-type system according to claim 6, wherein the at least one portion of the at least one tensioning control component is movable to different positions relative to the fulcrum point, and wherein the different positions are set and/or marked based on a characteristic of the electrode wire.

10. The welding-type system according to claim 9, wherein the characteristic of the electrode wire comprises one or both of a type and a thickness of the electrode wire.

11. The welding-type system according to claim 6, further comprising one or more movement and positioning components configured for facilitating movement and positioning of the at least one portion of the at least one tensioning control component relative to the fulcrum point.

12. The welding-type system according to claim 11, wherein the one or more movement and positioning components are configured to facilitate movement and positioning of the at least one portion of the at least one tensioning control component into one of a plurality of discrete positions relative to the fulcrum point,
optionally wherein the at least one tensioning control component comprises a knob based assembly, wherein the one or more movement and positioning components comprise an engaging part for engaging the knob, and wherein the engaging part comprises a plurality of discrete positions for the knob.

13. The welding-type system according to claim 11, wherein the one or more movement and positioning components are configured to facilitate movement and positioning of the at least one portion of the at least one tensioning control component in a continuous manner relative to the fulcrum point,
optionally wherein the at least one tensioning control component comprises a knob based assembly, wherein the one or more movement and positioning components comprise an engaging part for engaging the knob, and wherein the engaging part comprises a slot for enabling continuous movement and positioning of the knob.

14. The welding-type system according to claim 6, further comprising a securing component configured for securing the at least one portion of the at least one tensioning control component in place once a positioning selection is made.

15. The welding-type system according to claim 1, wherein each of the one or more wire tensioning control components is configured to apply at least a portion of the tensioning force using a spring.

FIG. 1

FIG. 2

FIG. 3

400

Tensioning Control
Component
410

Continuous Slot
422

Movement and Positioning
Component
420

FIG. 4

FIG. 5

Europäisches Patentamt

European Patent Office

Office européen des brevets

# EUROPEAN SEARCH REPORT

**Application Number**

EP 24 19 9003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/007448 A1 (ELCO ENTPR INC [US]) 14 January 2021 (2021-01-14) * figures 1,2 * | 1-15 | INV. B23K9/12 B23K9/133 |
| A | US 10 112 252 B2 (ILLINOIS TOOL WORKS [US]) 30 October 2018 (2018-10-30) * claim 1 * * figures 1-5 * | 1-15 | |

|   | TECHNICAL FIELDS SEARCHED (IPC) |
|---|---|
|   | B23K |

The present search report has been drawn up for all claims

| Place of search | Date of completion of the search | Examiner |
|---|---|---|
| Munich | 10 February 2025 | Perret, William |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................................
& : member of the same patent family, corresponding document

EPO FORM 1503 03.82 (P04C01)

# EP 4 527 537 A1

## ANNEX TO THE EUROPEAN SEARCH REPORT
## ON EUROPEAN PATENT APPLICATION NO.

EP 24 19 9003

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2025

| Patent document cited in search report | Publication date | Patent family member(s) | Publication date |
|---|---|---|---|
| WO 2021007448 A1 | 14-01-2021 | CA 3146576 A1 | 14-01-2021 |
| | | EP 3996864 A1 | 18-05-2022 |
| | | US 2022288714 A1 | 15-09-2022 |
| | | WO 2021007448 A1 | 14-01-2021 |
| US 10112252 B2 | 30-10-2018 | US 2012248084 A1 | 04-10-2012 |
| | | US 2017157694 A1 | 08-06-2017 |
| | | WO 2012135271 A1 | 04-10-2012 |

EPO FORM P0459

For more details about this annex : see Official Journal of the European Patent Office, No. 12/82

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63537071